# EUROPÄISCHE PATENTSCHRIFT

(11) **EP 1 148 960 B1**
(45) Veröffentlichungstag und Bekanntmachung des Hinweises auf die Patenterteilung: **15.10.2003**
(21) Anmeldenummer: 99964530.2
(22) Anmeldetag: 07.12.1999
(51) Int. Cl.: B22D 19/14, C04B 41/81, B60L 5/20

(54) **VERFAHREN ZUM IMPRÄGNIEREN VON PORÖSEN WERKSTÜCKEN**
METHOD FOR IMPREGNATING POROUS WORKPIECES
PROCEDE D'IMPREGNATION DE PIECES POREUSES

(30) Priorität: 09.12.1998 DE 19856809
(43) Veröffentlichungstag der Anmeldung: 31.10.2001
(73) Patentinhaber: Hoffmann & Co. Elektrokohle Aktiengesellschaft, 4823 Steeg (AT)
(72) Erfinder: REISER, Klaus, A-4820 Bad Ischl (AT)
(74) Vertreter: Glawe. Delfs. Moll
(86) Internationale Anmeldenummer: EP9909584
(87) Internationale Veröffentlichungsnummer: WO00033993

(56) Entgegenhaltungen:
- DE-A- 2 165 111
- US-A- 4 146 119
- US-A- 5 183 096
- PATENT ABSTRACTS OF JAPAN vol. 013, no. 334 (M-855), 27. Juli 1989 (1989-07-27) & JP 01 113163 A (SANYO ELECTRIC CO LTD), 1. Mai 1989 (1989-05-01)
- TEOH S H ET AL: "Tensile and fracture properties of titanium-polymer interpenetrating network composites" JOURNAL OF MATERIALS SCIENCE LETTERS, 1 SEPT. 1996, CHAPMAN & HALL, UK, Bd. 15, Nr. 17, Seiten 1478-1480, XP002133899 ISSN: 0261-8028

## Beschreibung

Die Erfindung betrifft ein Verfahren zum Imprägnieren von porösen Werkstücken, d. h. zum Füllen der Poren des Werkstücks mit einem mindestens während des Imprägnierens flüssigen Medium. Ein bevorzugtes, aber nicht ausschließliches Anwendungsgebiet der Erfindung ist das Imprägnieren von gesinterten Werkstücken aus Keramik oder insbesondere aus Kohlematerial, wie z. B. Grafit, die als Gleitlager oder als elektrische Gleitkontaktelemente wie Kohlebürsten oder Stromabnehmer, Verwendung finden. Das Werkstück kann mit den verschiedensten Imprägniermitteln zu verschiedenen Zwecken imprägniert werden, z. B. mit Öl oder Fett zum Verbessern der Gleiteigenschaften, mit Kunststoff zum Verbessern der mechanischen Festigkeit oder mit Metall oder Metall-Legierung zum Verbessern der elektrischen Leitfähigkeit.

Das übliche Verfahren zum Imprägnieren von porösen Werkstücken besteht im Eintauchen des Werkstücks in das flüssige Imprägniermittel, wobei das Imprägniermittel in die Poren des Werkstücks eingesaugt wird. Wenn das Imprägniermittel nicht von Natur aus flüssig ist, wird es in Form einer flüssigen Lösung oder in Form einer Schmelze verwendet. Eine Verbesserung des Tauch-Imprägnierens ist das Vakuum-Druckimprägnieren. Hierbei wird das Werkstück vor dem Eintauchen in das Imprägniermittel einem Vakuum ausgesetzt, um die Poren luftleer zu machen. Nach dem Eintauchen des Werkstücks wird das Imprägniermittel mit Druck beaufschlagt, um das Imprägniermittel in die Poren des Werkstücks einzupressen. Dieses übliche Imprägnierverfahren hat u. a. die folgenden Nachteile:
- Das Imprägnieren einschließlich der erforderlichen Vorbereitung, z. B. Einschichten der Werkstücke in den Imprägnierbehälter, ist sehr zeitaufwendig und dauert typischerweise etwa 2 - 8 Stunden.
- Es ist trotz Anwendung von Vakuum und Druck schwierig, eine über das gesamte Volumen des Werkstücks gleichmäßige, d. h. homogene und vollständige Porenfüllung zu erzielen.
- Anschließend an das Imprägnieren ist eine aufwendige Nachreinigung erforderlich, um Imprägniermittelreste von der Oberfläche des Werkstücks zu entfernen. Die erforderlichen mechanischen und/oder chemischen Reinigungsschritte sind teuer, zeitaufwendig und häufig mit erheblicher Umweltbelastung verbunden.

Der Erfindung liegt die Aufgabe zugrunde, ein neuartiges und verbessertes Verfahren zur Imprägnierung von porösen Werkstücken anzugeben. Insbesondere soll ein Verfahren geschaffen werden, mit dem bei relativ kurzer Behandlungszeit eine sehr homogene und vollständige Porenfüllung erreicht werden kann und auf eine aufwendige Nachbehandlung der werkstückoberfläche in der Regel verzichtet werden kann.

Die Aufgabe wird erfindungsgemäß und überraschenderweise dadurch gelöst, daß für das Imprägnieren von porösen Werkstücken die Spritzgießtechnik oder Druckgußtechnik angewendet wird. Demnach wird die Aufgabe durch das im Anspruch 1 angegebene Verfahren gelöst.

Die Unteransprüche beziehen sich auf vorteilhafte weitere Ausgestaltungen des Verfahrens bzw. des mit dem Verfahren imprägnierten Werkstücks.

Es wurde überraschenderweise gefunden, daß eine übliche Spritzgießmaschine oder Druckgußmaschine dazu verwendet werden kann, ein in der Spritzgießform oder Druckgußform angeordnetes poröses Werkstück mit einem flüssigen Imprägniermittel zu imprägnieren. Es wurde gefunden, daß dabei mit relativ kurzen Behandlungszeiten in der Größenordnung von etwa 1 - 3 Minuten eine im wesentlichen vollständige Füllung der Poren des porösen Werkstücks erzielt werden kann. Es wurde weiter gefunden, daß bei Verwendung einer Form, deren Formkavität an die Gestalt des Werkstücks angepaßt ist und dieses im wesentlichen spielfrei umschließt, im wesentlichen kein überschüssiges Imprägniermittel an der Oberfläche des Werkstücks verbleibt und deshalb eine Nachreinigung entweder überflüssig ist oder doch wesentlich vereinfacht wird.

Die US-A-5 183 096 beschreibt die Herstellung eines Verbundwerkstückes aus Verstärkungsmaterial wie Sil und einem Bindemetall wie Al. Eine Mischung aus dem Verstärkungsmaterial und einem brennbaren Binder wird in eine Form eingespritzt und durch Erhitzen in der Form der Binden verbrannt und ein Vorformkörper hergestellt, der dann in der Form durch Einspritzen von flüssigen Bindemetall infiltriert wird:

Aufgrund der verfahrensmässigen Unterschiede zur Erfindung und weil sich die erwähnte US-A nicht wie der Erfindung auf einen Kohlewerkstoff bezieht, kann die Erfindung dadurch nicht nahegelegt werden.

Bei dem erfindungsgemäßen Verfahren wird das kalte oder vorgewärmte Werkstück in die an das Werkstück angepaßte Formkavität eines geteilten, dicht schließbaren Formwerkzeugs (Scließeinheit) einer Spritzgieß- oder Druckgußmaschine eingelegt. Die Schließeinheit wird geschlossen, und das flüssige bzw. auf Verflüssigungstemperatur gebrachte Imprägniermittel wird mittels der Spritz- bzw. Druckguß-Einheit der Maschine in die geschlossene Form unter ausreichendem Druck eingepreßt. Die Druckbeaufschlagung der Form mit dem flüssigen Imprägniermittel wird solange aufrechterhalten, bis die Poren des Werkstücks vollständig gefüllt sind, wobei die hierfür erforderliche Zeitspanne nach Erfahrung zu wählen ist. Je nach der Art des verwendeten Imprägniermittels verweilt das Werkstück solange in der Form, bis z. B. die Metallschmelze erstarrt oder das Harz anoder ausgehärtet ist. Nach Beendigung des Imprägniervorgangs wird die Form geöffnet und das imprägnierte Werkstück mittels Ausstoßer ausgeworfen, wonach ein neuer Zyklus beginnen kann.

Durch paßgenaue Herstellung der Formkavität entsprechend der mit engen Maßtoleranzen einzuhaltenden Formgebung des Werkstücks wird erreicht, daß das Werkstück von der Formkavität allseits im wesentlichen spielfrei umschlossen ist, wobei der Spalt zwischen dem Werkstück und der Formkavität vorzugsweise deutlich kleiner als 100 µm ist und vorzugsweise auch kleiner als die Porengröße des Werkstücks ist. Es kann hierdurch erreicht werden, daß das in die Formkavität eingepreßte Imprägniermittel nur in die Poren, aber nicht in den Spalt zwischen dem Werkstück und der Formkavität einfließt, so daß die Oberfläche des Werkstücks, mit Ausnahme der Angußstelle, nicht mit Imprägniermittel verunreinigt wird. Damit minimiert sich die Nachbehandlung des Werkstücks auf das Abbrechen und eventuelle Überschleifen des Angusses.

Das erfindungsgemäße Imprägnierverfahren kann auch mit einer Druckgießmaschine durchgeführt werden, die für das sogenannte Squeeze-Casting, (Nachpress-Druckgießen) ausgebildet ist, oder mit einer Spritzgießmaschine, die für die Durchführung des Spritzprägens eingerichtet ist. Mit Squeeze-Casting bzw. Spritzprägen bezeichnet man Verfahren, bei denen die beiden Formhälften einer Druckgießform oder Spritzgießform zu Beginn des Gieß- oder Spritzvorganges noch nicht mit der vollen Schließkraft gegeneinander gepreßt sind. In diesem Zustand ist die Formkarvität zwar bereits dicht verschlossen, sie hat aber noch ein gewisses Übermaß gegenüber den Abmessungen bei vollständig gegeneinander gepreßten Formhälften, oder die Formhälften können sich unter dem Druck der eingespritzten Schmelze geringfügig auseinanderbewegen. Das vollständige Zusammenpressen der Formhälften erfolgt nach Beendigung des Gieß- oder Einspritzvorganges. Wird das erfindungsgemäße Imprägnierverfahren auf einer für diese Verfahrensführung ausgebildeten Druck- oder Spritzgießmaschine durchgeführt, so ergibt sich der Vorteil, daß zu Beginn des Gieß- oder Einspritzvorgangs noch ein geringer Spalt zwischen der Wand und der Formkavität und dem eingelegten, zu imprägnierenden Wirkstück vorhanden ist. In diesem Spalt kann sich das flüssige Imprägniermittel gleichmäßig über die Oberfläche des Werkstücks ausbreiten. Beim endgültigen Schließen der Formhälften verschwindet dieser Spalt, und das flüssige Imprägniermittel wird mechanisch in die Poren des Werkstücks eingepresst.

Mit dem erfindungsgemäßen Verfahren wird die Zykluszeit gegenüber den herkömmlichen Imprägnierverfahren wesentlich gesenkt. Sowohl der eigentliche Imprägniervorgang als auch die Vorbehandlung (Einlegen des Werkstücks in die Formkavität und Schließen der Form) sowie die Nachbehandlung (Öffnen der Form, Entnehmen des Werkstücks und ggf. Entfernen des Angusses) kann in sehr kurzer Zeit, z. B. drei Minuten, durchgeführt werden, verglichen mit dem herkömmlichen Verfahren, bei dem für jede dieser drei Phasen eine Zeitdauer von etwa 1 - 4 Stunden anzusetzen ist. Das erfindungsgemäße Verfahren läßt sich leicht automatisieren. Je nach Art des Werkstücks kann auch ein Mehrfachwerkzeug mit mehreren Formkavitäten verwendet werden, wodurch die Behandlungszeit nochmals deutlich gesenkt wird. Für das Verfahren können grundsätzlich die handelsüblichen Spritzgieß-Maschinen bzw. Druckguß-Maschinen verwendet werden, wie sie in der Kunststoff-Spritztechnik und Metalldruckgußtechnik üblich sind.

Ein weiterer Vorteil des erfindungsgemäßen Verfahrens liegt darin, daß viele Imprägniermittel wie Wachse, Harze und dgl., die nach dem herkömmlichen Verfahren nur in Form ihrer Lösung in Lösungsmittel verarbeitet werden konnten, lösemittelfrei verwendet werden können. Hierdurch kann das erfindungsgemäße Verfahren wesentlich umweltschonender durchgeführt werden als konventionelle Imprägnierverfahren. Mit dem erfindungsgemäßen Verfahren können Werkstücke mit sehr unterschiedlicher Porosität, z. B. Porositäten von 2 % bis 90 %, imprägniert werden. Vorzugsweise wird das Verfahren angewendet für Werkstücke aus Kohlewerkstoff, die als Gleitlager oder als elektrische Schleifkontakte in Form von Kohlebürsten oder Stromabnehmern verwendet werden sollen. Vorzugsweise werden die Kohlekörper hergestellt durch Mischung eines oder mehrerer der Bestandteile Naturgrafit, Elektrografit, Pyrografit, Kohlenstofffaser, Kunststofffaser, Koks, Ruß mit einem Bindemittel wie Steinkohlen- oder Petrolteere und -peche sowie Kunstharze, anschließende Formgebung mittels Pressen, Rammen oder Extrudieren und anschließende, in der Regel mehrstufige Temperaturbehandlung zum Sintern, Härten, Karbonisieren, Grafitieren, zwischen 100°C und 3200°C. Das Werkstück kann auch hergestellt werden durch Vorformen von Kohlenstofffasersträngen, -matten, - gewebe oder -wirkware, ggf. mit einer zur Formstabilität notwendigen Bindung mit Steinkohlen- oder Petrolteer oder - pech oder durch Kunstharz, und eine anschließende Temperaturbehandlung zwischen 100°C und 3200°C.

Als Imprägniermittel können verwendet werden
- natürliche oder künstliche Öle, Fette oder Wachse;
- natürliche oder künstliche Harze, einschl. künstlicher Harze, die durch Modfizierung, wie Veresterung oder Verseifung natürlicher Harze, hergestellt sind;
- Kunststoffe, die durch Polymerisation, Polyaddition oder Polykondensation hergestellt wurden und in einen für das Imprägnieren notwendigen fließfähigen Zustand gebracht werden können;
- sämtliche Metalle oder Metall-Legierungen.
- vorbehandelte oder unbehandelte Peche.

Das Imprägniermittel kann der das Werkstück enthaltenden geschlossenen Form an einer Zuführstelle oder an mehreren Zuführstellen zugeführt werden Formstücke, die z. B. aus einem pulverförmigen Kohlewerkstoff durch Pressen oder Extrudieren und anschließendes Sintern hergestellt worden sind, haben häufig eine Vorzugsrichtung der porösen Struktur, wobei die Vorzugsrichtung rechtwinklig zur Preßrichtung oder parallel zur Extrusionsrichtung liegt. Bei solchen Werkstücken bietet das erfindungsgemäße Verfahren die Möglichkeit, die Zuführstelle des Imprägniermittels an der das Werkstück enthaltenden Form so anzuordnen, daß die Fortpflanzungsrichtung des Imprägniermittels in der Formkavität bzw. durch die Poren des Werkstücks im wesentlichen parallel zu der genannten Vorzugsrichtung verläuft. Es hat sich jedoch gezeigt, daß dies in der Regel nicht nötig ist, sondern daß auch bei Werkstücken, die herstellungsbedingt eine Anisotropie bzw. Vorzugsrichtung der Porosität aufweisen, das Imprägniermittel an beliebiger Stelle des Werkstücks zugeführt werden kann und die Bewegung des Imprägniermittels im Werkstück in beliebiger Richtung relativ zur Vorzugsrichtung erfolgen kann, wobei trotzdem die Imprägnierung ebenso gleichmäßig und homogen wird wie bei isostatisch gepreßten Formstücken ohne Vorzugsrichtung.

Ein Ausführungsbeispiel der Erfindung wird anhand der Zeichnung näher erläutert. Es zeigt:
- Fig. 1: im Längsschnitt eine Druckgußform mit einem darin eingelegten porösen Werkstück;
- Fig. 2: einen Schnitt nach der Linie II-II von Fig. 1.

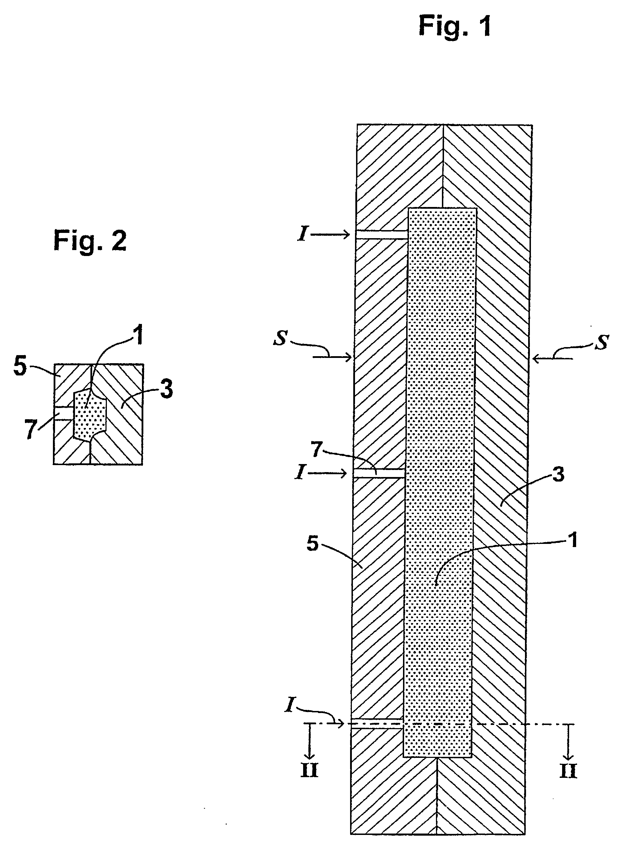

Gemäß Fig. 1 hat ein vorgefertigtes zu imprägnierendes Werkstück 1 die Form einer langgestreckten Schleifleiste zur Befestigung am Stromabnehmer eines elektrischen Schienenfahrzeuges. Das Werkstück 1 besteht aus einem gesinterten, porösen Kohlewerkstoff. Es wird durch einen Formgebungsvorgang, z.B. Extrudieren oder Pressen, und eine nachfolgende Wärmebehandlung (Sintern) mit sehr exakter Maßhaltigkeit hergestellt. Das Werkstück 1 wird dann in die aus zwei Formhälften 3,5 bestehende Spritzgußform eingelegt, deren Formkavität exakt entsprechend den Abmessungen des Werkstücks 1 gearbeitet ist. Die Druckgußform hat an mehreren, über ihre Länge verteilten Stellen angeordnete Einspritzkanäle 7. Über diese wird nicht, wie beim normalen Druckgießen, ein Druckgußwerkstoff zum Formen eines Werkstücks, sondern ein flüssiges Imprägniermittel zum Füllen der Poren des bereits in der Formkavität vorhandenen porösen Werkstücks 1 eingespritzt.

Druckgießmaschinen mit Schließeinheit und Gießeinheit sind dem Fachmann bekannt. Es wird beispielsweise auf Lueger, Lexikon der Technik, Band 8, Stichworte "Druckgießen" und "Druckgießmaschine" verwiesen. Die beiden Formhälften 3, 5 der in Fig. 1 und 2 dargestellten Druckgußform werden an den Aufspannplatten der Schließeinheit der Druckgießmaschine befestigt und nach dem Einlegen des Werkstücks 1 geschlossen und mit einer Schließkraft S beaufschlagt. Anschließend wird über die Gießeinheit der Druckgießmaschine das flüssige, z.B. geschmolzene Imprägniermittel in Richtung der Pfeile I mit geeignetem Einspritzdruck über die Einspritzkanäle 7 in die Form eingepreßt, so daß es die Poren des Werkstücks 1 homogen ausfüllt. Vor dem Einlegen in die Form oder vor dem Einspritzen des Imprägniermittels wird das Werkstück 1 vorzugsweise auf eine geeignete Temperatur vorgewärmt.

Als Beispiel wurde die Imprägnierung (Infiltrierung) einer Schleifleiste 1 aus Kohlewerkstoff mit geschmolzenem Aluminiumsilicid AlSi12 mit folgenden Parametern durchgeführt. Als Druckgießmaschine wurde eine Standarddruckgießmaschine der Fa. Bühler mit 250 to Schließdruck verwendet. Das während 2 Minuten auf 650°C vorgewärmte Werkstück wurde in die auf 250° vorgewärmte Druckgußform eingelegt und diese mit dem Schließdruck von 250 to beaufschlagt. Das geschmolzene Imprägniermittel (AlSi12) hatte eine Temperatur von 650°C und wurde mit einem Druck von 200 bar über die Einspritzkanäle 7 in die Form eingepreßt. Der Einpreßdruck von 200 bar wurde insgesamt 3 Sekunden lang aufrechterhalten. Anschließend wurde die Form geöffnet und das imprägnierte Werkstück 1 entnommen. Es wies eine sehr gleichmäßige Füllung der Poren mit dem Imprägniermittel und eine von Imprägniermittel freie Oberfläche auf. Deshalb kann sich die Nachbearbeitung des imprägnierten Werkstücks auf das Wegschlagen oder Wegschleifen der im Bereich der Einspritzkanäle 7 verbleibenden Angüsse beschränken. Die Maschine kann mit einer Zykluszeit von ca. 3 Minuten betrieben werden.

Anstelle einer Druckgießmaschine kann für das erfindungsgemäße Verfahren auch eine übliche Spritzgießmaschine verwendet werden. Die Spritzgießmaschine kann von beliebiger bekannter Bauart sein, wie sie in der Fachliteratur, zum Beispiel dem Buch "Kunststoffmaschinenführer", Hsg. F. Johannaber, Hanser-Verlag München 1992 beschrieben sind. Je nach der Beschaffenheit des verwendeten Imprägniermittels kann unter Umständen die vorhandene Plastifizier- und Spritzeinheit mit Schnecke auch zum Injizieren des flüssigen Imprägniermittels verwendet werden. Ansonsten kann die übliche Plastifizier- und Spritzeinheit mit Schnecke ersetzt werden durch eine einfache Einspritzeinheit mit Kolben zum Einspritzen des flüssigen Imprägniermittels.

Falls bei dem erfindungsgemäßen Verfahren eine Metallegierung als Imprägniermittel verwendet wird, insbesondere eine Aluminium- oder Magnesiumlegierung, so kann für das Imprägnieren eine Spritzgießmaschine verwendet werden, die nach dem sogenannten Thixomolding-Verfahren arbeitet. Hierbei wird die Tatsache ausgenutzt, daß bestimmte Legierungen dieser Metalle in einem bestimmten Temperaturbereich zwischen der festen und flüssigen Phase eine thixotrope Übergangsphase aufweisen. Für das Spritzgießen von Formkörpern aus solchen Legierungen ist es bekannt, sie in der Schnekkeneinheit einer Spritzgießmaschine auf die dem thixotropen Zustand entsprechende Temperatur zu erhitzen, wobei durch die Einwirkung der rotierenden Schnecke das Kristallwachstum begrenzt wird, und die Metallegierung in diesem thixotropen Zustand in die Spritzgießform zu injizieren. In gleicher Weise kann auch das erfindungsgemäße Imprägnierverfahren durchgeführt werden, wenn in der Spritzgießform das poröse Werkstück angeordnet wird, das mit der thixotropen Metallegierung imprägniert werden soll.

## Patentansprüche

1. Verfahren zum porenfüllenden Imprägnieren eines porösen Werkstücks aus Kohlewerkstoff mit einem Imprägniermittel in Form eines Metalls oder einer Metallegierung, das während des Imprägnierens im geschmolzenen flüssigen Zustand vorliegt, wobei das poröse Werkstück vor dem Imprägnieren vorgefertigt wird durch Mischen eines pulver- oder faserförmigen Kohlewerkstoffs mit Bindemittel, Formgebung der Mischung zu einem Formkörper mittels Pressen, Rammen oder Extrudieren und anschließende Temperaturbehandlung zum Sintern, Härten, Carbonisieren und/oder Grafitieren des Werkstücks;
**gekennzeichnet durch** die Schritte:
Anordnen des Werkstücks in der Formkavität einer schließbaren Form, die nach Art eines Spritzgieß- oder Druckgußformwerkzeugs ausgebildet ist und mindestens eine an die Form des vorgefertigten Werkstücks eng angepaßte Formkavität aufweist;
Schließen der Form;
Einspritzen des geschmolzenen Metalls oder der Metallegierung unter Druck in die Formkavität mittels einer Spritzgießvorrichtung oder Druckgußvorrichtung.

2. Verfahren nach Anspruch 1, **dadurch gekennzeichnet, daß** die Formkavität derart an die Kontur des Werkstücks angepaßt ist, daß das Werkstück im wesentlichen allseitig spielfrei an der Wandung der Formkavität anliegt.

3. Verfahren nach Anspruch 1 oder 2, **dadurch gekennzeichnet, daß** ein für das Squeeze-Casting oder das Spritzprägen ausgebildetes Druckgieß- oder Spritzgießformwerkzeug verwendet wird, dessen beide Formhälften zu Beginn des Einspritzvorganges noch nicht vollständig gegeneinander gepreßt sind, so daß die Formkavität ein Übermaß gegenüber dem in ihr angeordneten Werkstück hat, und daß während oder nach dem Einspritzvorgang die Formhälften vollständig zusammengedrückt und dadurch das im Spalt zwischen Formkavität und Werkstück befindliche flüssige Imprägniermittel mechanisch in die Poren des Werkstücks eingepreßt wird.

4. Verfahren nach Anspruch 1, **dadurch gekennzeichnet, daß** das Werkstück ein Gleitlager oder ein elektrisches Schleifkontaktelement, insbesondere Kohlebürste oder Stromabnehmer, ist.

5. Verfahren nach einem der Ansprüche 1 - 4, **dadurch gekennzeichnet, daß** das Werkstück vor seinem Einbringen in die Form oder innerhalb der Form vor und/oder während des Imprägniervorgangs erwärmt wird.

6. Verwendung des Verfahrens nach einem der Ansprüche 1 - 5 für die Herstellung eines imprägnierten Werkstücks aus kohlenstoffhaltigem Material, welches ein Gleitlager, eine Kohlebürste oder ein Schleifstück für einen Stromabnehmer ist.

## Claims

1. A method for the pore-filling impregnation of a porous workpiece consisting of carbon material with an impregnating agent in the form of a metal or a metal alloy, which agent is present during the impregnation in the molten fluid state, wherein the porous workpiece is prefabricated, prior to impregnation, by mixing a powdered or fibrous carbon material with binder, shaping the mixture to form a moulding by means of compressing, ramming or extrusion, and subsequent temperature treatment for sintering, hardening, carbonisation and/or graphitisation of the workpiece;
**characterised by** the steps:
arranging the workpiece in the mould cavity of closable mould which is in the form of an injection mould or a die-casting mould and has at least one mould cavity closely adapted to the shape of the prefabricated workpiece;
closing the mould;
injecting the molten metal or metal alloy under pressure into the mould cavity by means of an injection-moulding apparatus or a die-casting apparatus.

2. A method according to Claim 1, **characterised in that** the mould cavity is adapted to the contour of the workpiece so that the workpiece abuts substantially on all sides without clearance against the walls of the mould cavity.

3. A method according to Claim 1 or 2, **characterised in that** a die-casting mould or an injection mould designed for squeeze casting or injection compression moulding is used, the two mould halves of which are not completely pressed against one another at the beginning of the injection process so that the mould cavity is oversized with respect to the workpiece disposed therein, and **in that** during or after the injection process the mould halves are completely pressed together, whereby the fluid impregnating agent situated in the gap between the mould cavity and the workpiece is mechanically injected into the pores of the workpiece.

4. A method according to Claim 1, **characterised in that** the workpiece is a plain bearing or an electric sliding contact element, in particular a carbon brush or current collector.

5. A method according to any one of Claims 1 to 4, **characterised in that** the workpiece is heated before it is introduced into the mould or inside the mould before and/or during the impregnation process.

6. Use of the method according to any one of Claims 1 to 5 for the production of an impregnated workpiece consisting of carbon-containing material, which is a plain bearing, a carbon brush or a shoe for a current collector.

## Revendications

1. Procédé pour imprégner par remplissage des pores une pièce poreuse en carbone d'un imprégnant sous la forme d'un métal ou d'un alliage de métaux, qui, pendant l'imprégnation, se trouve à l'état fondu liquide, la pièce poreuse étant préfabriquée avant l'imprégnation par mélange d'un carbone pulvérulent ou fibreux avec des liants, formage du mélange en un corps façonné par pressage, damage ou extrusion et traitement thermique consécutif pour le frittage, le durcissement, la carbonisation et/ou graphitisation de la pièce ; **caractérisé par** les étapes suivantes :
mise en place de la pièce dans la cavité d'un moule pouvant être fermé qui est réalisé à la manière d'un outil de moulage par injection ou sous pression et qui présente au moins une cavité étroitement adaptée à la forme de la pièce préfabriquée ;
fermeture du moule ;
injection du métal fondu ou de l'alliage de métaux sous pression dans la cavité du moule au moyen d'un dispositif d'injection ou d'un dispositif de moulage sous pression.

2. Procédé selon la revendication 1, **caractérisé en ce que** la cavité du moule est adaptée au contour de la pièce de manière que la pièce s'applique sensiblement de tous côtés sans jeu contre la paroi de la cavité du moule.

3. Procédé selon la revendication 1 ou 2, **caractérisé en ce qu'**on utilise un outil de moulage sous pression ou par injection conçu pour le squeeze-casting ou l'estampage à injection, dont les deux moitiés ne sont pas encore entièrement pressées l'une contre l'autre au début du processus d'injection, ce qui fait que la cavité du moule présente une dimension supérieure à celle de la pièce disposée à l'intérieur de celle-ci, et **en ce que** pendant ou après l'injection, les moitiés du moule sont totalement pressées ensemble et de ce fait l'imprégnant liquide se trouvant dans la fente entre la cavité du moule et la pièce est pressé mécaniquement dans les pores de la pièce.

4. Procédé selon la revendication 1, **caractérisé en ce que** la pièce est un palier de glissement ou un élément de contact frottant électrique, en particulier un balai en charbon ou un connecteur.

5. Procédé selon l'une des revendications 1 à 4, **caractérisé en ce que** la pièce est chauffée avant d'être introduite dans le moule ou à l'intérieur du moule avant et/ou pendant le processus d'imprégnation.

6. Mise en oeuvre du procédé selon l'une des revendications 1 à 5 pour la fabrication d'une pièce imprégnée en un matériau contenant du carbone qui est un palier de glissement, un balai en charbon ou une pièce frottante pour un connecteur.
